# EUROPÄISCHE PATENTANMELDUNG

(11) **EP 3 466 747 A1**
(43) Veröffentlichungstag der Anmeldung: **10.04.2019**
(21) Anmeldenummer: 18179345.6
(22) Anmeldetag: 22.06.2018
(51) Int. Cl.: B60L 53/14, B60L 53/16, B60L 53/30, B60L 53/31, B60L 53/18, H02J 7/00, H01R 13/631, H02G 11/00, H02G 11/02, B65H 75/44

(54) **LADESTATION FÜR ELEKTROFAHRZEUGE MIT EINEM HÖHENVERSTELLBAR GEHALTENEN LADEKABELSTECKER**

(30) Priorität: 11.08.2017 DE 102017118300
(71) Anmelder: Elektro-Bauelemente GmbH, 44536 Lünen (DE)
(72) Erfinder: Kachouh, Checrallah, 44227 Dortmund (DE)
(74) Vertreter: Wickord, Wiro

(57) **Zusammenfassung**

Die Erfindung betrifft eine Ladestation zum Bereitstellen elektrischer Energie für ein elektrisch betreibbares Fahrzeug umfassend eine Ladekabeleinrichtung (2) mit einem Ladekabelstecker (26) zum Anschluss an das Fahrzeug, wobei der Ladekabelstecker (26) höhenverstellbar aufgehängt ist mittels einer Aufhängevorrichtung (15), die über ein Zugmittel (16) verfügt zum jedenfalls mittelbaren Halten des Ladekabelsteckers (26), wobei der Ladekabelstecker (26) in einer Grundposition gegen einen ersten Anschlag positioniert ist und aus der Grundposition in eine Bereitstellungsposition verbringbar ist, in der der Ladekabelstecker (26) unterhalb der Grundposition bereitgestellt ist, wobei zum Verbringen des Ladekabelsteckers (26) aus der Grundposition in die Bereitstellungsposition ein biegeschlaff ausgebildetes und/oder schwenkbar befestigtes Betätigungselement (14) vorgesehen ist, welches mit dem Ladekabelstecker (26) jedenfalls mittelbar verbunden ist.

## Beschreibung

Die Erfindung betrifft eine Ladestation zum Bereitstellen elektrischer Energie für elektrisch betreibbare Fahrzeuge. Als Fahrzeuge im Sinne der Erfindung gelten insbesondere alle Automobile (PKW, LKW, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die Ladestation kann verwendet werden zum Bereitstellen von elektrischer Energie für Fahrzeuge mit und ohne eigenen Energiespeicher.

Ladestationen zum Bereitstellen elektrischer Energie für elektrisch betreibbare Fahrzeuge finden zunehmend Verbreitung im öffentlichen Bereich, beispielsweise auf Parkplätzen, und im privaten Umfeld. Die Ladeinfrastruktur ist dabei heute überwiegend zugeschnitten auf die Bedürfnisse und Gewohnheiten des privaten Nutzers, der sich mit einem elektrisch betriebenen PKW oder Zweirad fortbewegt, beziehungsweise auf gewerblich genutzte PKW. Spezielle Lösungen für den gewerblichen Liefer- und Verteilverkehr sind demgegenüber erst in Ansätzen entwickelt. So beschreibt beispielsweise die EP 3 035 478 A1 ein Konzept zur modularen elektrischen Verkabelung einer Ladestation mit verteilt angeordneten Ladepunkten, welche bevorzugt im gewerblichen Umfeld zur Anwendung kommen kann. Konzepte zur konstruktiven Realisierung einer auf die Bedürfnisse des gewerblichen Bereichs zugeschnittenen, insbesondere modularen Ladestation sind demgegenüber bis heute nicht bekannt.

Aufgabe der vorliegenden Erfindung ist es, eine Ladestation anzugeben, welche an die rauen Nutzungsbedingungen im gewerblichen Bereich angepasst ist und insbesondere gegen Beschädigungen beim Anfahren und Abfahren von Nutzfahrzeugen gesichert ist.

Zur Lösung der Aufgabe weist die Erfindung die Merkmale des Patentanspruchs 1 auf.

Demzufolge umfasst die erfindungsgemäße Ladestation eine Ladekabeleinrichtung mit einem Ladekabelstecker zum Anschluss an das Fahrzeug, wobei die Ladekabeleinrichtung mit dem Ladekabelstecker höhenverstellbar aufgehängt ist mittels einer Aufhängevorrichtung, die über ein Zugmittel verfügt zum jedenfalls mittelbaren Halten des Ladekabelsteckers, wobei der Ladekabelstecker in einer Grundposition gegen einen ersten Anschlag positioniert ist und aus der Grundposition in eine Bereitstellungsposition verbringbar ist, in der der Ladekabelstecker in einer geringeren Höhe vorgesehen ist als in der Grundposition, und wobei zum manuellen Verbringen des Ladekabelsteckers aus der Grundposition in die Bereitstellungsposition ein elastisch und/oder biegeschlaff ausgebildetes und/oder schwenkbar befestigtes, manuell bedienbares Betätigungselement vorgesehen ist, welches mit dem Ladekabelstecker jedenfalls mittelbar verbunden ist.

Der besondere Vorteil der Erfindung besteht darin, dass durch die höhenverstellbare Aufhängung des Ladekabelsteckers das elektrisch betriebene Fahrzeug in einfacher Weise rangieren kann, solange die Ladekabeleinrichtung mit dem Ladekabelstecker in der Grundposition vorgesehen ist. Diese kann nämlich so hoch gewählt werden, dass der Ladekabelstecker mit dem Fahrzeug selbst beziehungsweise einem Aufbau des Fahrzeugs nicht kollidiert. Das Fahrzeug kann also unter den Ladekabelstecker beziehungsweise der Ladekabeleinrichtung hindurch fahren. Um gleichwohl die Erreichbarkeit des Ladekabelsteckers zu gewährleisten, ist das flexibel ausgebildete beziehungsweise schwenkbar befestigte Betätigungselement vorgesehen, welches soweit nach unten geführt ist, dass ein Nutzer das Betätigungselement in einfacher Weise greifen und mithilfe des Betätigungselements die Ladekabeleinrichtung mit dem Ladekabelstecker aus der Grundposition in die Bereitstellungsposition verbringen kann. Aufgrund seiner biegeschlaffen/elastischen Ausbildung beziehungsweise schwenkbaren Befestigung ist das Betätigungselement als Hindernis für das Fahrzeug beim Rangieren von untergeordneter Bedeutung. Beispielsweise kann das Betätigungselement aus einem textilen, immanent elastischen beziehungsweise nachgiebigem Werkstoff hergestellt sein und/oder eine Griffschlaufe bilden, die eine einfache Höhenverstellung des Ladekabelsteckers begünstigt.

Nach einer bevorzugten Ausführungsform der Erfindung ist die Grundposition der Ladekabeleinrichtung mit dem Ladekabelstecker als eine Vorzugsstellung ausgebildet. Hierzu ist das Zugmittel der Aufhängevorrichtung mit einer Rückstellkraft beaufschlagt, welche den Ladekabelstecker bei Fehlen einer entsprechenden Gegenkraft in die Grundposition zieht. Vorteilhaft ist so sichergestellt, dass der Ladekabelstecker ohne aktives Zutun in die Grundposition gelangt. Er ist dadurch in besonders effektiver Weise gegen eine Beschädigung gesichert. Des Weiteren wird vermieden, dass der Ladekabelstecker in einer undefinierten Zwischenstellung zwischen der Grundposition einerseits und der Bereitstellungsposition andererseits vorgesehen ist, in der sich der Nutzer beispielsweise an dem Ladekabelstecker den Kopf stoßen kann beziehungsweise der Ladekabelstecker gegen das Fahrzeug schlägt und dieses beschädigt.

Nach einer Weiterbildung der Erfindung ist die Bereitstellungsposition als eine Raststellung ausgebildet derart, dass der Ladekabelstecker zum Verbringen desselben in die Bereitstellungsposition zunächst über die Bereitstellungsposition hinaus bewegt wird und dann in die Bereitstellungsposition zurückgezogen wird beziehungsweise dass der Ladekabelstecker zum Verbringen desselben aus der Bereitstellungsposition in die Grundposition zunächst gegen die Rückstellkraft des Zugmittels bewegt wird und dann in die Grundposition zurückgezogen wird. Vorteilhaft ist das Vorsehen der Rastung in der Bereitstellungsposition eine deutliche Vereinfachung der Handhabung der Ladestation. Ein manuelles Festlegen ist insofern nicht erforderlich. Darüber hinaus ist durch das Vorsehen der Raststellung eine stets definierte Position vorgegeben für den Ladekabelstecker. Hierdurch ist der Nutzer bei der Verwendung der Ladestation weiter entlastet und einer Fehlbedienung wirksam vorgebeugt.

Es ist nach der Erfindung die Bereitstellungsposition nicht zwingend als eine Raststellung ausgebildet. Insofern kann nach einer alternativen Ausführungsform der Erfindung vorgesehen sein, dass der Ladekabelstecker manuell in der Bereitstellungsposition gehalten wird oder andere Befestigungsmittel vorgesehen sind, um den Ladekabelstecker in der Bereitstellungsposition zu fixieren.

Nach einer Weiterbildung der Erfindung ist das Zugmittel mit einer Federkraft beaufschlagt zum Aufprägen der Rückstellkraft. Vorteilhaft kann die Kraftbeaufschlagung durch das Vorsehen der Feder in sehr einfacher Weise erfolgen. Abhängig von der konkreten Konstruktion der Aufhängevorrichtung kann beispielsweise eine Torsionsfeder, eine Spiralfeder, eine Gasfeder oder eine klassische Zugfeder vorgesehen sein. Optional und alternativ kann eine Beaufschlagung des Zugmittels mit einer Gewichtskraft erfolgen.

Nach einer Weiterbildung der Erfindung ist ein Verstellweg für die Ladekabeleinrichtung mit dem Ladekabelstecker über einen zweiten Anschlag begrenzt. Es ist hierdurch vorteilhaft sichergestellt, dass der Ladekabelstecker nicht beliebig über die Bereitstellungsposition hinaus nach unten gezogen werden kann. Es ergibt sich insofern ein definierter Verstellweg für den Ladekabelstecker, sodass letztlich die Ladestation im Allgemeinen sowie die Ladekabeleinrichtung und die Aufhängevorrichtung im Speziellen vor einer Beschädigung durch unsachgemäßen Gebrauch geschützt sind.

Nach einer Weiterbildung der Erfindung ist ein vertikaler Abstand zwischen der Grundposition und der Bereitstellungsposition kleiner als der Verstellweg der Ladekabeleinrichtung mit dem Ladekabelstecker. Ein Verhältnis zwischen dem vertikal bestimmten Abstand der Grundposition und der Bereitstellungsposition einerseits und dem Verstellweg andererseits liegt bevorzugt im Bereich von mehr als 0,9 und besonders bevorzugt im Bereich von mehr als 0,95. Vorteilhaft ergibt sich hierdurch ein vergleichsweise geringer Überhub für den Ladekabelstecker über die Bereitstellungsposition hinaus mit der Folge, dass die Bereitstellungsposition vergleichsweise bodennah gewählt werden kann und eine einfache Bedienung der Ladestation begünstigt wird.

Nach einer Weiterbildung der Erfindung ist das Zugmittel elastisch beziehungsweise biegeschlaff ausgebildet. Vorteilhaft ist das Zugmittel hierbei gegen eine Beschädigung selbst dann gesichert, wenn das Fahrzeug etwa beim Rangieren gegen das Zugmittel stößt beziehungsweise beim Beladen des Fahrzeugs mit Waren das Zugmittel etwa von einem Stapler angefahren wird.

Nach einer Weiterbildung der Erfindung ist das Zugmittel in der Grundposition beziehungsweise in der Bereitstellungsposition jedenfalls abschnittsweise auf einer Trommel der Aufhängevorrichtung bevorratet. Vorteilhaft ergibt sich durch das Vorsehen der Trommel ein kompakter Aufbau für die Aufhängevorrichtung und das Zugmittel ist insbesondere in der Grundposition vor Beschädigung geschützt bevorratet.

Nach einer Weiterbildung der Erfindung ist zur Realisierung der Raststellung an dem Zugmittel ein Rastkörper vorgesehen, welcher mit dem Zugmittel starr verbunden ist und zum Halten der Ladekabeleinrichtung mit dem Ladekabelstecker in der Bereitstellungsposition und/oder in der Grundposition vorgesehen ist. Beispielsweise kann der Rastkörper in der Bereitstellungsposition gegen den zweiten Anschlag angelegt sein.

Nach einer Weiterbildung der Erfindung dient der Rastkörper zur Begrenzung der Bewegung des Zugmittels dahingehend, dass der Rastkörper in der Grundposition gegen den ersten Anschlag positioniert ist.

Nach einer Weiterbildung der Erfindung ist der Rastkörper beim Verbringen des Ladekabelsteckers von der Grundposition in die Bereitstellungsposition und/oder zurück entlang einer Steuerkulisse der Aufhängevorrichtung geführt. Beispielsweise kann der zweite Anschlag für den Verstellweg des Ladekabelsteckers durch einen an der Steuerkulisse gebildeten Block realisiert sein, gegen den der Rastkörper positioniert ist und der einer weiteren Verstellung des Rastkörpers entgegenwirkt. Darüber hinaus kann vorgesehen sein, dass der Rastkörper in der Bereitstellungsposition in einer Senke der Steuerkulisse gehalten ist, dass der Rastkörper beim Verbringen des Ladekabelsteckers von der Grundposition in die Bereitstellungsposition entlang einer ersten Steuerkante der Steuerkulisse geführt ist beziehungsweise dass der Rastkörper beim Verbringen des Ladekabelsteckers von der Bereitstellungsposition in die Grundposition entlang der zweiten Steuerkante der Steuerkulisse geführt ist. Vorteilhaft ergibt sich durch das Vorsehen der Steuerkulisse mit den Blöcken, der Senke beziehungsweise den Steuerkanten ein sehr kompakter Aufbau der Aufhängevorrichtung bei der Realisierung der Bereitstellungsposition als Raststellung sowie eine mechanisch robuste Ausführung, welche eine lange Lebensdauer auch unter den rauen Nutzungsbedingungen zum Beispiel der Logistikbranche begünstigt.

Nach einer Weiterbildung der Erfindung ist die Ladestation modular ausgebildet. Sie umfasst das Ladekabeleinrichtung mit einem ersten Ladekabelsegment, welches über ein elektrisches Schaltmodul an ein Versorgungsnetz angeschlossen ist, mit einem zweiten Ladekabelsegment, an dem endseitig ein Ladekabelstecker festgelegt zum Anschluss der Ladestation an das Fahrzeug, und mit einem Adaptermodul zum elektrischen und mechanischen Verbinden der Ladekabelsegmente. Des Weiteren umfasst die modulare Ladestation ein das Schaltmodul aufweisendes Steuergerät und eine Aufhängevorrichtung mit einem Zugmittel, wobei die Aufhängevorrichtung ausgebildet ist für eine Über-Kopf-Montage der Ladekabeleinrichtung und wobei das Zugmittel an dem ersten Ladekabelsegment und/oder an dem Adaptermodul festgelegt ist. Vorteilhaft ist durch den modularen Aufbau der Ladestation eine flexible Anpassung an die sehr vielfältigen räumlichen Gegebenheiten im gewerblichen Bereich in einfacher Weise möglich. Wenn sich beispielsweise die Gebäude selbst, die Geometrie einer an den Gebäuden vorgesehenen Laderampe, die Größe und Höhe eines Vordachs beziehungsweise eine Deckenhöhe jeweils unterscheiden, kann eine Vielzahl von gleichen Funktionskomponenten (Steuergerät, Ladekabeleinrichtung beziehungsweise einzelne Ladekabelsegmente und Adaptermodul, Aufhängevorrichtung, Ladekabelstecker) wiederverwendet und nach den örtlichen Gegebenheiten konfektioniert werden. Nur einzelne, für den speziellen Fall zu modifizierende Funktionskomponenten werden entsprechend den Gegebenheiten vor Ort angepasst. Es ist insofern möglich, verschiedene Funktionskomponenten identisch wiederzuverwenden mit der Folge, dass die Entwicklungskosten, die Herstellkosten und die Montagekosten gering gehalten werden können und letztlich die Ladestation besonders wirtschaftlich bereitgestellt werden kann. Darüber hinaus sinkt der Aufwand für die funktionelle Prüfung und Qualitätskontrolle durch die Verwendung von Gleichteilen. Ferner ist es möglich, im Nachhinein die Installation zu verändern und beispielsweise eine Anpassung an einen anderen Fahrzeugtyp oder bauliche Veränderungen vorzunehmen oder dergleichen vorzunehmen, indem nur einzelne Funktionskomponenten ausgetauscht oder modifiziert werden.

Nach einer Weiterbildung der Erfindung werden das Steuergerät mit dem Schaltmodul beziehungsweise das Adaptermodul mit dem hieran festgelegten zweiten Ladekabelsegment werksseitig vorgefertigt und stets identisch verwendet. Es ist hierdurch möglich, das Steuergerät und das Adaptermodul mit dem zweiten Ladekabelsegment industriell in großer Stückzahl zu fertigen und die Kosten weiter zu senken.

Nach einer Weiterbildung der Erfindung wird die Aufhängevorrichtung mit dem Zugmittel werksseitig vorgefertigt, wobei das Zugmittel werksseitig eine vorbestimmte, maximale Länge aufweist und bei der Installation der Ladestation vor Ort entsprechend der dortigen Gegebenheiten eine Installationslänge für das Zugmittel bedarfsgerecht eingestellt wird und insbesondere das Zugmittel bedarfsgerecht eingekürzt wird. Vorteilhaft kann auf diese Weise die Aufhängevorrichtung kostengünstig vorgefertigt werden. Eine Anpassung ist allein in Bezug auf die Länge des Zugmittels vorzusehen. Die Kosten der Aufhängevorrichtung können insofern ebenfalls gering gehalten werden.

Grundsätzlich erlaubt es die werksseitige Vorfertigung des Steuergeräts, des Adaptermoduls mit dem zweiten Ladekabelsegment sowie der Aufhängevorrichtung, den Montage- beziehungsweise Installationsaufwand vor Ort gering zu halten. Die Zeit für die Installation der Ladestation und damit die Beeinträchtigung der betrieblichen Abläufe reduziert sich. Darüber hinaus ergibt sich eine Qualitätsverbesserung, da die Möglichkeiten zur Montage und Prüfung der Komponenten bei der werksseitigen Fertigung regelmäßig besser sind als bei einer (Teil-) Montage am Ort der Installation der Ladestation. Hier beeinflussen beispielsweise das Wetter und das eher handwerkliche denn industrielle Arbeiten gegebenenfalls die Qualität.

Nach einer Weiterbildung der Erfindung ist das Steuergerät nach Art einer Wallbox wandmontiert ausgeführt. Vorteilhaft ergeben sich bei der Wandmontage des Steuergeräts nur geringe bauliche Änderungen und Vorarbeiten am Gebäude und es kann auf das Vorsehen eines Fundaments für das Steuergerät verzichtet werden. Zudem kann bei dem Vorsehen einer Wallbox auf die erdseitige Zuführung einer Anschlussleitung für das Versorgungsnetz verzichtet werden. Es ist insofern dem Modulgedanken folgend die Realisierung des Steuergerät als Wallbox geeignet, den Installationsaufwand und damit die Kosten weiter zu reduzieren.

Nach einer Weiterbildung der Erfindung ist eine decken- beziehungsweise dachbefestigte Montageschiene für die Aufhängevorrichtung vorgesehen und es sind an der Aufhängevorrichtung Befestigungsmittel ausgebildet zum Festlegen derselben an der Montageschiene. Vorteilhaft erlaubt die Verwendung einer bevorzugt stets gleichen Montageschiene für die Aufhängevorrichtung eine weitere Vereinfachung der Installation beziehungsweise Montage der Aufhängevorrichtung vor Ort. Im Rahmen der Über-Kopf-Montage der Ladekabeleinrichtung wird insofern die Montageschiene unter Berücksichtigung der baulichen Gegebenheiten vor Ort installiert und dann die Aufhängevorrichtung über stets gleich ausgebildete Befestigungsmittel an der Montageschiene festgelegt. Eine Ausrichtung der Aufhängevorrichtung kann insofern an der Montageschiene erfolgen. Es kann darauf verzichtet werden, die Aufhängevorrichtung unmittelbar an dem Gebäude beziehungsweise einer Decke oder einem Vordach desselben festzulegen.

Nach einer Weiterbildung der Erfindung sind als Befestigungsmittel an der Aufhängevorrichtung Rollen vorgesehen und die Montageschiene ist nach Art eines längsgeschlitzten Vierkant-Rohrprofils ausgebildet. Vorteilhaft ergibt sich durch das Vorsehen der Rollen und die Realisierung der Montageschiene als längsgeschlitztes Vierkant-Rohrprofil eine einfache Möglichkeit zur exakten Positionierung der Aufhängevorrichtung an der Montageschiene. Die Rollen werden hierzu im Bereich des Längsschlitzes der Montageschiene in ebendiese eingesetzt und es kann die Aufhängevorrichtung mithilfe der Rollen an der Montageschiene längsverschoben werden. Sobald in Abhängigkeit von den baulichen Gegebenheiten vor Ort die korrekte Position für die Aufhängevorrichtung gefunden ist, kann die Aufhängevorrichtung an der Montageschiene endgültig fixiert werden.

Nach einer Weiterbildung der Erfindung umfasst die Ladestation eine Sicherheitsladekabeleinrichtung mit einem ersten Ladekabelsegment, welches über ein elektrisches Schaltmodul an ein Versorgungsnetz angeschlossen ist, mit einem zweiten Ladekabelsegment, an dem endseitig ein Ladekabelstecker festgelegt ist zum Anschluss der Ladestation an das Fahrzeug, und mit einer mehrteiligen Sicherheitskupplung als Adaptermodul zum elektrischen und mechanischen Verbinden des ersten Ladekabelsegments mit dem zweiten Ladekabelsegment. Die Sicherheitskupplung sieht hierzu eine erste Koppeleinheit, eine zweite Koppeleinheit und ein zum zerstörungsfrei lösbaren, mechanischen Verbinden der ersten Koppeleinheit mit der zweiten Koppeleinheit ausgebildetes Verbindungsmodul vor. Die erste Koppeleinheit weist darüber hinaus ein elektrisch leitend mit dem ersten Ladekabelsegment verbundenes Steckelement und die zweite Koppeleinheit ein elektrisch leitend an das Steckelement der ersten Koppeleinheit ansetzbares Gegensteckelement auf, welches elektrisch leitend mit dem zweiten Ladekabelsegment verbunden ist. Vorteilhaft ist durch das Vorsehen der Sicherheitsladekabeleinrichtung mit der Sicherheitskupplung einer Beschädigung der Ladestation beim Anfahren an eine der Ladestation zugewiesene Parkposition, in der das Fahrzeug zugleich elektrisch geladen und mit Waren beladen wird, sowie beim Verlassen der Parkposition besonders wirksam vorgebeugt. Es ist nämlich so, dass über die Sicherheitskupplung der Sicherheitsladekabeleinrichtung das erste Ladekabelsegment von dem zweiten Ladekabelsegment getrennt wird, wenn eine unzulässig hohe mechanische Belastung an der Sicherheitskupplung wirkt. Dies mag beispielsweise dann der Fall sein, wenn vor dem Verlassen der Parkposition das Fahrzeug nicht von der Ladestation getrennt wird und insofern der Ladekabelstecker, welcher endseitig an dem zweiten Ladekabelsegment vorgesehen ist, sich noch im Fahrzeug eingesetzt befindet. Ebenso mag die mechanische Belastung unzulässig groß sein, wenn beim Anfahren der Ladestation die beispielsweise über Kopf hängend montierte Sicherheitsladekabeleinrichtung unbemerkt mit einem Aufbau des Fahrzeugs angefahren wird und sich an dem Fahrzeug verhakt. Ebenso ergibt sich ein Schutz gegen Vandalismus beziehungsweise Missbrauch. Jeweils ist durch die erfindungsgemäße Konstruktion sichergestellt, dass jedenfalls die teuren elektromechanischen Funktionskomponenten der Ladestation, insbesondere das Steuergerät mit dem elektrischen Schaltmodul, sowie die Gebäudeinfrastruktur und insbesondere auch das Fahrzeug selbst vor einer Beschädigung geschützt sind. Darüber hinaus wird die Sicherheitskupplung definiert im Bereich zwischen der ersten Koppeleinheit und der zweiten Koppeleinheit getrennt mit der Folge, dass auch die Komponenten der Sicherheitskupplung üblicherweise nicht beschädigt werden. Sollte gleichwohl im Einzelfall eine Komponente der Sicherheitskupplung beschädigt werden, weil beispielsweise das Fahrzeug mit seinen Reifen die zweite Koppeleinheit überrollt, ist allein diese Komponente der ansonsten modular aufgebauten Ladestation zu ersetzen. Der zeitliche Aufwand und die damit verbundenen Kosten sind insofern gering.

Nach einer Weiterbildung der Erfindung sind die erste Koppeleinheit und die zweite Koppeleinheit durch das Verbindungsmodul kraftschlüssig und nicht formschlüssig verbunden. Vorteilhaft kann die kraftschlüssige Verbindung der Koppeleinheiten in einfacher Weise zerstörungsfrei gelöst werden. Beispielsweise kann das Verbindungsmodul ausgebildet sein zum Verklemmen der ersten Koppeleinheit mit der zweiten Koppeleinheit.

Nach einer Weiterbildung der Erfindung ist das Verbindungsmodul der Sicherheitsladekabeleinrichtung ausgebildet zum magnetischen Verbinden der Koppeleinheiten. Insofern weist eine Koppeleinheit einen Magneten, bevorzugt einen Dauermagneten auf und an der anderen Koppeleinheit ist ein korrespondierend gestalteter, mit dem Magneten zusammenwirkender Magnetgegenkörper vorgesehen. Vorteilhaft kann durch das Vorsehen des Magneten eine konstruktiv einfache und dauerhaft sichere Verbindung zwischen den Koppeleinheiten hergestellt werden. Zudem kann eine Kraft zum mechanischen Trennen der magnetischen Verbindung reibungsunabhängig und mit einer ausreichenden Genauigkeit voreingestellt werden. Zudem kann die magnetische Verbindung der Koppeleinheiten konstruktiv einfach realisiert und damit kostengünstig gestaltet sein.

Nach einer Weiterbildung der Erfindung sind die Koppeleinheiten in einer ersten Betriebsanordnung der Sicherheitsladekabeleinrichtung mechanisch aneinander festgelegt. Zudem ist das Steckelement zum Bilden einer Steckverbindung mit dem Gegensteckelement elektrisch kontaktiert. In einer Sicherheitstrennanordnung der Sicherheitsladekabeleinrichtung sind demgegenüber die Koppeleinheiten mechanisch getrennt und es ist die elektrische Verbindung zwischen den Ladekabelsegmenten unterbrochen, wobei das Steckelement nicht an das Gegensteckelement angesetzt ist. Vorteilhaft ergibt sich hierdurch in der Betriebsanordnung der Sicherheitsladekabeleinrichtung die uneingeschränkte Möglichkeit zum elektrischen Laden des Fahrzeugs. Zudem ist eine mechanische und elektrische Kopplung in der Sicherheitstrennanordnung vorgesehen mit der Folge, dass trotz einer Beschädigung beziehungsweise eines unvorhergesehenen Betriebszustands den Sicherheitsanforderungen Genüge getan ist und einer Beschädigung der Infrastruktur sowie eine Gefährdung der beteiligten Personen wirksam vorgebeugt ist.

Nach einer Weiterbildung der Erfindung ist in einer Übergangsanordnung der Sicherheitsladekabeleinrichtung die mechanische Verbindung zwischen den Koppeleinheiten gelöst, während das Gegensteckelement noch elektrisch leitend mit dem Steckelement verbunden ist. Es ist insofern vorgesehen, dass bei einer Betätigung der Sicherheitskupplung zunächst die mechanische Verbindung aufgehoben wird und dann im Weiteren die elektrische Kopplung getrennt wird.

Nach einer Weiterbildung der Erfindung ist eine zum Lösen der mechanischen Verbindung zwischen den Koppeleinheiten aufzuwendende Trennkraft größer als eine Haltekraft, welche aufzubringen ist zum Lösen des Steckelements von dem Gegensteckelement. Beispielsweise liegt die Haltekraft im Bereich von 30 kg. Vorteilhaft ist hierdurch sichergestellt, dass nach dem Auslösen der Sicherheitskupplung und dem Trennen der mechanischen Verbindung die vorliegende (Stör-) Kraft ausreichend groß ist, um die Steckverbindung zu trennen. Konstruktiv kann die Trennkraft beispielsweise durch eine geeignete Wahl des Dauermagneten eingestellt werden, wohingegen die Haltekraft sich durch die Wahl beziehungsweise geometrische Gestaltung des Steckelements und des Gegensteckelements definiert.

Nach einer Weiterbildung der Erfindung ist an der zweiten Koppeleinheit eine Zugentlastung vorgesehen für das zweite Ladekabelsegment. Vorteilhaft wird hierdurch sichergestellt, dass einer Beschädigung des Ladekabelsegments auch bei großen (Stör-) Kräften wirksam vorgebeugt ist und eine Übertragung unzulässig hoher mechanischer Kräfte über das Ladekabel vermieden wird. Die Steckverbindung ist insofern mechanisch nicht belastet. Optional kann eine Zugentlastung selbstverständlich auch als Teil der ersten Koppeleinheit vorgesehen sein zum Zugentlasten des ersten Ladekabelsegments.

Nach einer Weiterbildung der Erfindung ist die Sicherheitsladekabeleinrichtung für eine Über-Kopf-Montage vorgesehen, wobei die erste Koppeleinheit über eine Aufhängevorrichtung höhenverstellbar gehalten ist und an der zweiten Koppeleinheit beziehungsweise dem zweiten Ladekabelsegment ein Betätigungselement zum Höhenverstellen der Sicherheitskupplung vorgesehen ist. Vorteilhaft kann hierdurch zum einen erreicht werden, dass die Ladestation von dem Fahrzeug flexibel angefahren werden kann. Es ergibt sich insofern eine hohe Flexibilität in Bezug auf das Rangiervermögen und die Parkposition. Zugleich ergibt sich durch die Über-Kopf-Montage der Sicherheitsladekabeleinrichtung eine hohe Flexibilität und Freiheit beim Beladen des Fahrzeugs. Es kann insbesondere sichergestellt werden, dass ein Nutzfahrzeug seitlich oder von hinten frei zugängig ist und beladen werden kann, während es elektrisch geladen wird. Das Fahrzeug kann beispielsweise rückwärts an eine Laderampe herangefahren werden und die Sicherheitsladekabeleinrichtung mit der Sicherheitskupplung kann hängend an einem Vordach montiert werden. Die Sicherheitsladekabeleinrichtung ist gleichwohl einfach bedienbar, weil im Zusammenwirken mit der zweiten Koppeleinheit beziehungsweise dem zweiten Ladekabelsegment das Betätigungselement, insbesondere eine textile Handhabe beziehungsweise eine Griffschlaufe vorgesehen ist. Über das bevorzugt biegeschlaff beziehungsweise nachgiebig ausgebildete beziehungsweise schwenkbar aufgehangene Betätigungselement kann insofern die Höhenverstellung realisiert werden.

Nach einer Weiterbildung der Erfindung weist die Aufhängevorrichtung ein biegeschlaffes beziehungsweise elastisches Zugmittel auf, wobei das Zugmittel an dem ersten Ladekabelsegment beziehungsweise an der ersten Koppeleinheit der Sicherheitskupplung festgelegt ist. Mittels des Zugmittels ist hierbei die Über-Kopf-Montage realisiert. Die biegeschlaffe beziehungsweise elastische Ausbildung desselben stellt sicher, dass sich eine immanente Nachgiebigkeit realisieren lässt, welche einer Beschädigung der Sicherheitsladekabeleinrichtung auch dann entgegenwirkt, wenn beispielsweise die Sicherheitskupplung oder das zweite Ladekabelsegment mit dem Ladekabelstecker beim Anfahren an die Parkposition berührt wird.

Nach einer Weiterbildung der Erfindung ist die Ladekabeleinrichtung über die Aufhängevorrichtung höhenvariabel gehalten, wobei das Adaptermodul beziehungsweise die Sicherheitskupplung in einer oberen Grundposition gegen den ersten Anschlag positioniert ist und aus der Grundposition in eine Bereitstellungsposition verbringbar ist, in der der Ladekabelstecker unterhalb der Grundposition bereitgestellt ist und dann an das Fahrzeug angesetzt werden kann zur Durchführung des Ladevorgangs. Vorteilhaft ist einer Beschädigung der Ladekabeleinrichtung, welche an einem freien Ende des zweiten Ladekabelsegments vorgesehen ist, in der Grundposition aufgrund der Höhe wirksam vorgebeugt. Beispielsweise kann die Grundposition so gewählt werden, dass die Fahrzeuge mit der üblichen Aufbauhöhe beim Einparken nicht in Kontakt gelangen können mit dem Ladekabelstecker, der Sicherheitskupplung beziehungsweise der Sicherheitsladekabeleinrichtung. In der Bereitstellungsposition ist der Ladekabelstecker dann so bereitgestellt, dass er zugängig ist und gegriffen werden kann zum Verbinden der Ladestation mit dem Fahrzeug.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: eine Prinzipdarstellung einer an einer Betriebsimmobilie (Lagerhalle) installierten, erfindungsgemäßen Ladestation,
- Fig. 2: eine Detailvergrößerung der Installationsanordnung nach Fig. 1,

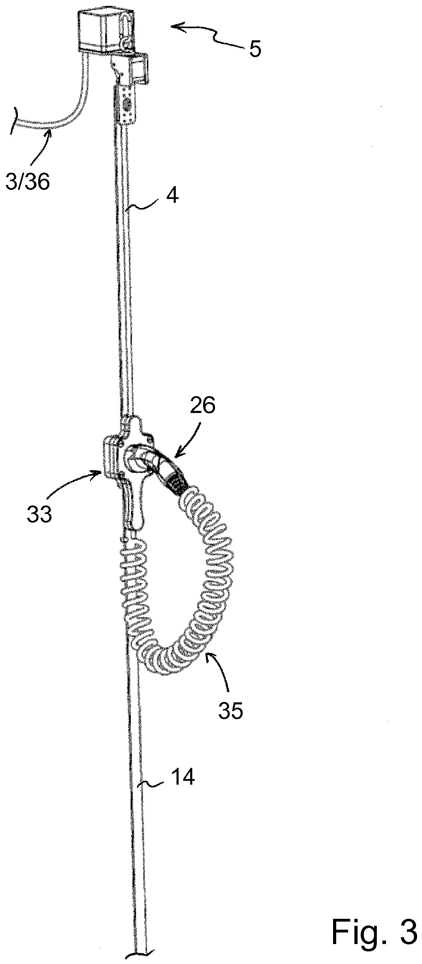

- Fig. 3: einen Teil einer Sicherheitsladekabeleinrichtung der erfindungsgemäßen Ladestation nach Fig. 1,
- Fig. 4: eine erste perspektivische Ansicht einer Sicherheitskupplung der Sicherheitsladekabeleinrichtung nach Fig. 3 in einer Betriebsanordnung,
- Fig. 5: eine zweite perspektivische Ansicht der Sicherheitskupplung nach Fig. 4 in der Betriebsanordnung,
- Fig. 6: eine erste perspektivische Ansicht der Sicherheitskupplung nach Fig. 4 in einer Sicherheitstrennanordnung,
- Fig. 7: eine zweite perspektivische Ansicht der Sicherheitskupplung nach Fig. 4 in der Sicherheitstrennanordnung,

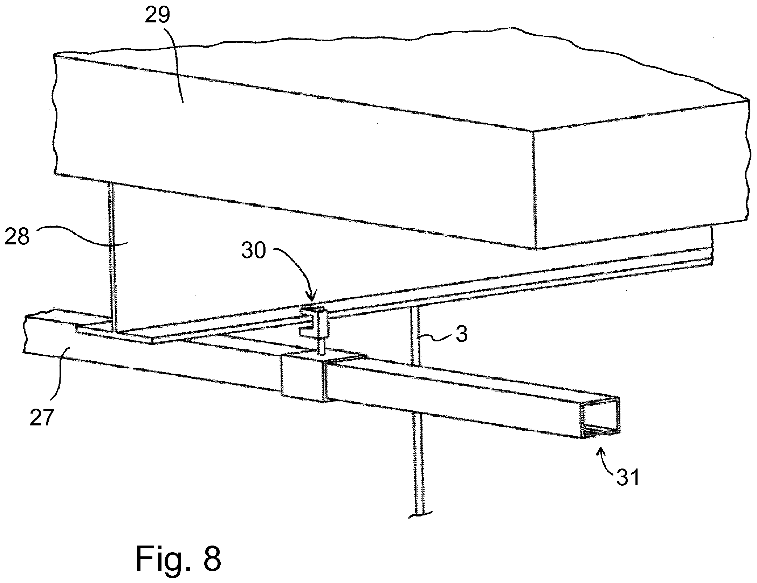

- Fig. 8: eine Detaildarstellung einer Montageanordnung für die Über-Kopf-Montage der Sicherheitsladekabeleinrichtung,
- Fig. 9: eine perspektivische Ansicht einer für die Über-Kopf-Montage vorgesehenen Aufhängevorrichtung,
- Fig. 10: eine Prinzipdarstellung der Aufhängevorrichtung nach Fig. 9 in der Grundposition,
- Fig. 11: die Prinzipdarstellung der Aufhängevorrichtung nach Fig. 9 in einer ersten Zwischenposition,
- Fig. 12: die Prinzipdarstellung der Aufhängevorrichtung nach Fig. 9 in einer zweiten Zwischenposition,
- Fig. 13: die Prinzipdarstellung der Aufhängevorrichtung nach Fig. 9 in der Bereitstellungsposition,
- Fig. 14: die Prinzipdarstellung der Aufhängevorrichtung nach Fig. 9 in einer dritten Zwischenposition,
- Fig. 15: die Prinzipdarstellung der Aufhängevorrichtung nach Fig. 9 in einer vierten Zwischenposition,
- Fig. 16: eine Prinzipdarstellung einer ersten alternativen Ausführungsform der Aufhängevorrichtung in einer Grundposition,
- Fig. 17: eine Aufsicht auf die Aufhängevorrichtung nach Fig. 16,
- Fig. 18: die Prinzipdarstellung der Aufhängevorrichtung nach Fig. 16 in einer ersten Zwischenposition,
- Fig. 19: die Prinzipdarstellung der Aufhängevorrichtung nach Fig. 16 in einer zweiten Zwischenposition,
- Fig. 20: die Prinzipdarstellung der Aufhängevorrichtung nach Fig. 16 in der Bereitstellungsposition,
- Fig. 21: die Prinzipdarstellung der Aufhängevorrichtung nach Fig. 16 in einer dritten Zwischenposition,
- Fig. 22: die Prinzipdarstellung der Aufhängevorrichtung nach Fig. 16 in einer vierten Zwischenposition und
- Fig. 23: eine Prinzipdarstellung einer zweiten alternativen Ausführungsform der Aufhängevorrichtung in der Grundposition.

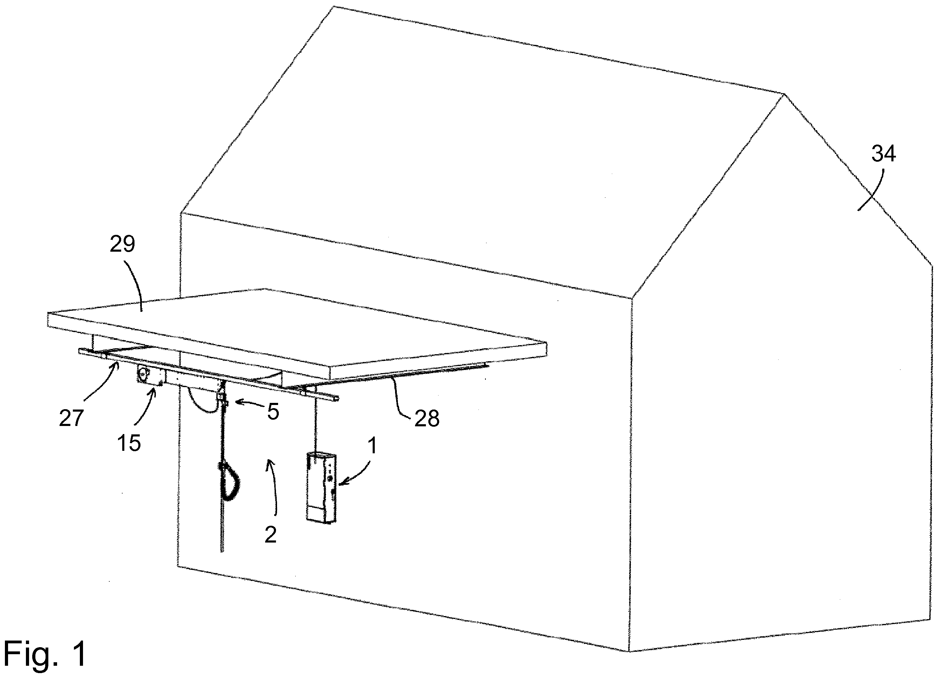

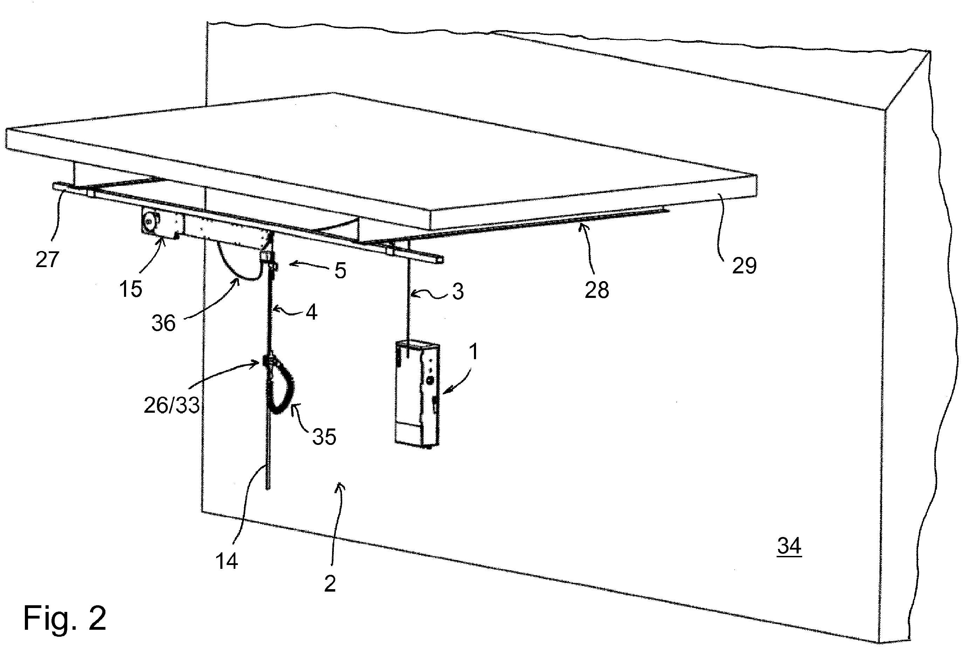

Eine erfindungsgemäße modulare Ladestation zum Bereitstellen elektrischer Energie für ein elektrisch betreibbares Fahrzeug nach den Fig. 1 und 2 umfasst als wesentliche Funktionskomponenten ein Steuergerät 1 sowie eine Ladekabeleinrichtung 2, die als eine Sicherheitsladekabeleinrichtung 2 realisiert ist. Das Steuergerät 1 ist nach Art einer Wallbox wandmontiert ausgeführt und an einer Seitenwand eines Gebäudes 34, beispielsweise einer Lager- und Logistikhalle befestigt. Das Steuergerät 1 umfasst ein Schaltmodul, welches dazu dient, den Ladevorgang zu starten beziehungsweise zu beenden und bedarfsgerecht die Verbindung zu dem Versorgungsnetz herzustellen. Das Schaltmodul sieht hierzu beispielsweise mindestens ein Schütz vor oder wenigstens einen anderen Leistungsschalter. Die Sicherheitsladekabeleinrichtung 2 sieht ein erstes Ladekabelsegment 3 sowie ein zweites Ladekabelsegment 4 und ein nach Art einer Sicherheitskupplung ausgebildetes Adaptermodul 5 zum Verbinden des ersten Ladekabelsegments 3 mit dem zweiten Ladekabelsegment 4 vor. Die Sicherheitskupplung 5 umfasst eine dem ersten Ladekabelsegment 3 zugeordnete erste Koppeleinheit 6 sowie eine dem zweiten Ladekabelsegment 4 zugeordnete zweite Koppeleinheit 7 und ein Verbindungsmodul 8 zum zerstörungsfrei lösbaren, mechanischen Verbinden der ersten Koppeleinheit 6 mit der zweiten Koppeleinheit 7.

Die erfindungsgemäße Ladestation ist insbesondere ausgebildet zum Bereitstellen elektrischer Energie für Nutzfahrzeuge, welche während einer Ruhephase beziehungsweise beim Beladen des Fahrzeugs mit Ware elektrisch geladen werden. Aus diesem Grund ist die Sicherheitsladekabeleinrichtung 2 in einer Über-Kopf-Montage an einem Vordach 29 des Gebäudes 34 höhenverstellbar gehalten. Für die höhenverstellbare Montage ist eine Aufhängevorrichtung 15 vorgesehen, welche über ein Zugmittel 16 mit der Sicherheitskupplung 5 verbunden ist. Die Aufhängevorrichtung 15 wiederum ist über eine Montageschiene 27 an dem Vordach 29 festgelegt.

Die Sicherheitsladekabeleinrichtung 2 sieht als erste wesentliche Komponente das erste Ladekabelsegment 3 vor, welches von dem Steuergerät 2 wandmontiert vertikal nach oben unter das Vordach 29 geführt ist und weiter bis in den Bereich eines vorderen Randabschnitts des Vordachs 29 unter ebendiesem vorgesehen wird. Das erste Ladekabelsegment 3 wird dann benachbart zu der Aufhängevorrichtung 15 als Schlaufe 36 zu einem Steckelement 11 der ersten Koppeleinheit 6 geführt, mit dem es elektrisch leitend verbunden ist.

Das zweite Ladekabelsegment 4 der Sicherheitsladekabeleinrichtung 2 ist von der zweiten Koppeleinheit 7 bis zu einem Ladekabelstecker 26 geführt, welcher ausgebildet ist zum Anschluss der Ladestation an das Fahrzeug. Es handelt sich insofern um einen genormten Ladekabelstecker 26.

Zum Verbinden der zweiten Koppeleinheit 7 mit dem zweiten Ladekabelsegment 4 ist an der zweiten Koppeleinheit 7 ein korrespondierend zu dem Steckelement 11 gebildetes Gegensteckelement 12 vorgesehen, welches elektrisch leitend an das Steckelement 11 der ersten Koppeleinheit 6 angesetzt werden kann, mit diesem eine Steckverbindung bildet und elektrisch leitend mit dem zweiten Ladekabelsegment 4 verbunden ist. An dem zweiten Ladekabelsegment 4 ist des Weiteren eine Aufnahme 33 für den Ladekabelstecker 26 vorgesehen. Die Aufnahme 33 ist elektrisch nicht kontaktiert. Sie dient dazu, den Ladekabelstecker 26 in einer definierten Position zu halten, während die Ladestation nicht verwendet wird. Weiter sieht das zweite Ladekabelsegment 4 einen Spiralkabelabschnitt 35 vor. Der Spiralkabelabschnitt 35 des zweiten Ladekabelsegments 4 dient als Kabelvorrat. Er stellt sicher, dass der Ladekabelstecker 26 auch dann an das elektrisch betriebene Fahrzeug angesetzt werden kann, wenn das Fahrzeug etwas außerhalb der vorgesehenen Parkposition abgestellt ist, beziehungsweise dient dazu, verschiedene Fahrzeugtypen mit der Ladestation zu verbinden, welche das zur Aufnahme des Ladekabelsteckers 26 ausgebildete Kupplungsstück mithin an verschiedenen Stellen vorsehen.

Neben der ersten Koppeleinheit 6 mit dem Steckelement 11 und der zweiten Koppeleinheit 7 mit dem Gegensteckelement 12 sieht die Sicherheitskupplung 5 zudem das Verbindungsmodul 8 vor. Das Verbindungsmodul 8 sieht zum mechanischen Verbinden der Koppeleinheiten 6, 7 einen der ersten Koppeleinheit 6 zugeordneten Dauermagneten 9 sowie einen Magnetgegenkörper 10 vor, welcher der zweiten Koppeleinheit 7 zugeordnet ist. Die Koppeleinheiten 6, 7 sind insofern kraftschlüssig miteinander verbunden.

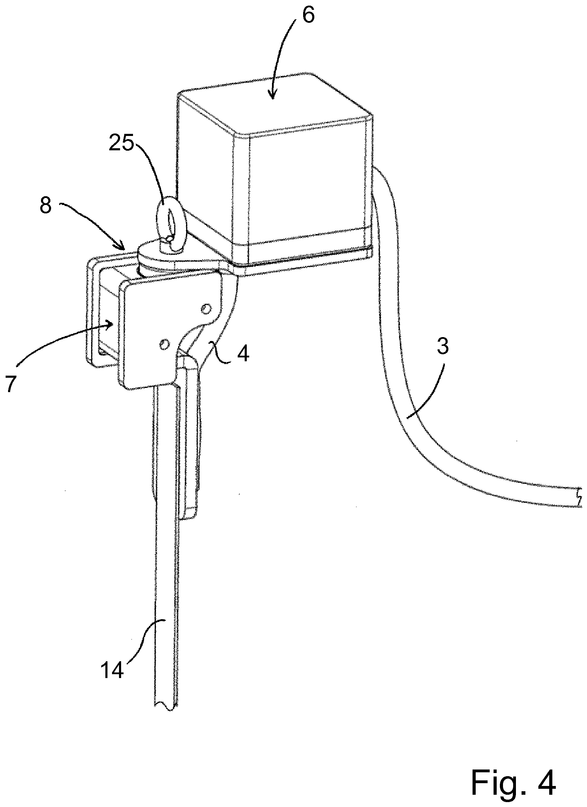

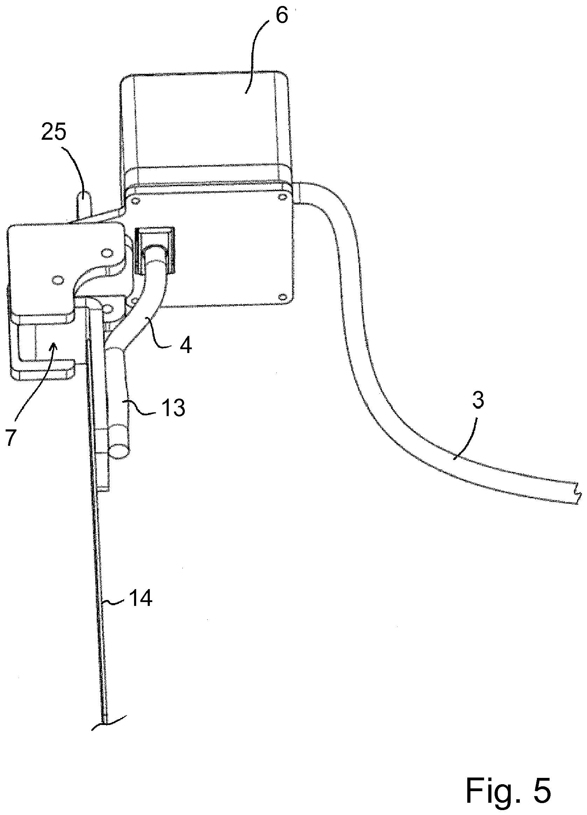

Die Sicherheitskupplung 5 dient dazu, das erste Ladekabelsegment 3 mechanisch und elektrisch mit dem zweiten Ladekabelsegment 4 zu verbinden. Wie in den Fig. 4 und 5 dargestellt, ist hierzu der Dauermagnet 9 des Verbindungsmoduls 8 an dem Magnetgegenkörper 10 angesetzt und die erste Koppeleinheit 6 mechanisch fest mit der zweiten Koppeleinheit 7 verbunden. Zudem greift das Gegensteckelement 12 der zweiten Koppeleinheit 7 in das an der ersten Koppeleinheit 6 vorgesehene Steckelement 11 ein zum elektrisch leitenden Verbinden der Ladekabelsegmente 3, 4. Für das zweite Ladekabelsegment 4 ist dabei an der zweiten Koppeleinheit 7 eine Zugentlastung 13 realisiert. Durch die Zugentlastung 13 ist sichergestellt, dass in einer Betriebsanordnung der Sicherheitskupplung 5, in der die Koppeleinheiten 6, 7 mechanisch und elektrisch verbunden sind, keine mechanischen Kräfte über die durch das Steckelement 11 in das Gegensteckelement 12 gebildete Steckverbindung übertragen werden.

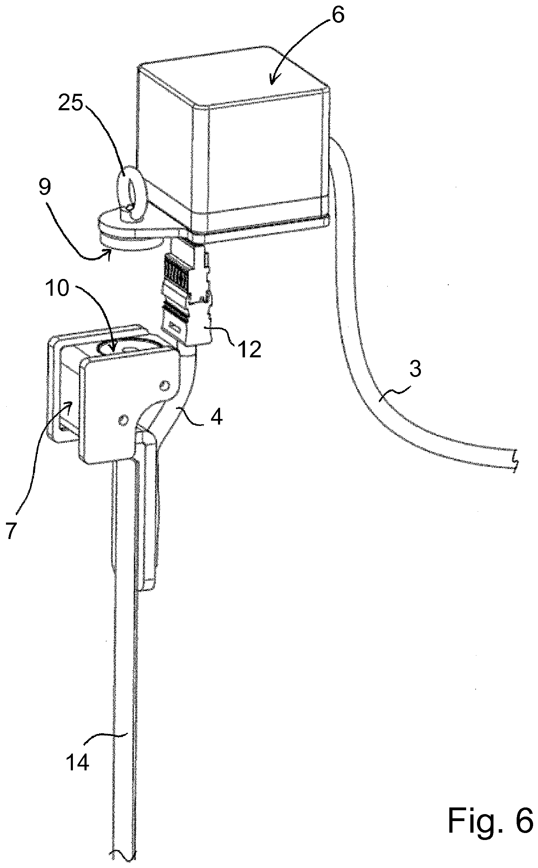

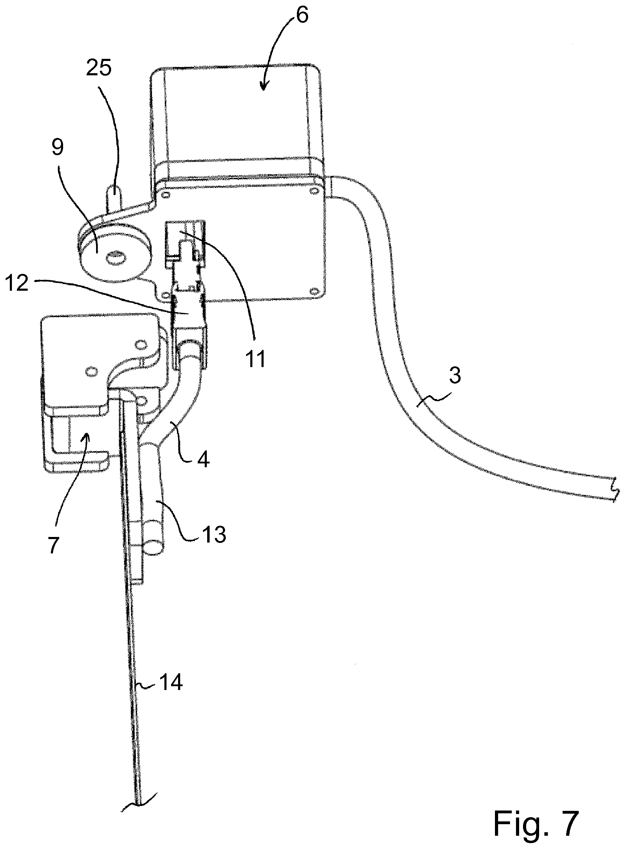

In einer Sicherheitstrennanordnung der Sicherheitskupplung 5 nach den Fig. 6 und 7 ist die erste Koppeleinheit 6 der Sicherheitskupplung 5 im Bereich des Verbindungsmoduls 8 von der zweiten Koppeleinheit 7 getrennt. Der Dauermagnet 9 des Verbindungsmoduls 8 liegt insofern nicht an dem Magnetgegenkörper 10 an, welcher der zweiten Koppeleinheit 7 zugeordnet ist. Zudem ist das Gegensteckelement 12 aus dem Steckelement 11 der ersten Koppeleinheit 6 entnommen und neben der mechanischen Verbindung auch die elektrische Verbindung zwischen dem ersten Ladekabelsegment 3 und dem zweiten Ladekabelsegment 4 verbunden. Es ist insofern in der Sicherheitstrennanordnung der Sicherheitsladekabeleinrichtung 2 der Ladekabelstecker 26, welcher an einem freien Ende des zweiten Ladekabelsegments 4 vorgesehen ist, nicht mehr mit dem Steuergerät 1 der Ladestation verbunden.

Die Über-Kopf-Montage der Ladekabeleinrichtung 2 bedient sich zunächst der Aufhängevorrichtung 15 mit dem Zugmittel 16, welches mit einer an der ersten Koppeleinheit 6 der Sicherheitskupplung 5 vorgesehenen Öse 25 verbunden ist. Die Aufhängevorrichtung 15 ist über die Montageschiene 27 an einem Träger 28 für das Vordach 29 vorgesehen. Zum Festlegen der Montageschiene 27 an dem nach Art eines Doppel-T-Profils ausgebildeten Träger 28 erfolgt über ein Verbindungsmittel 30, welches beispielsweise als Schraubklemme beziehungsweise als Schnellverbindungsmittel ausgebildet sein kann. Durch das Vorsehen des Verbindungsmittels 30 ist sichergestellt, dass die modulare Ladestation schnell und flexibel an verschiedenen Vordachkonstruktionen angesetzt werden kann. Es kann insofern stets die gleiche Montageschiene 27 verwendet werden und eine Anpassung der Installation an die baulichen Gegebenheiten vor Ort kann allein durch eine entsprechende Ausgestaltung des Verbindungsmittels 30 realisiert werden.

Die Montageschiene 27 ist nach Art eines Vierkant-Rohrprofils ausgebildet. Sie weist einen Längsschlitz 31 auf. Im Bereich des Längsschlitzes 31 greift die Aufhängevorrichtung 15 mit daran vorgesehenen Rollen 32 in die Montageschiene 27 ein. Es ist insofern in einfacher Weise möglich, die Aufhängevorrichtung 15 entlang der Montageschiene 27 zu verschieben und entsprechend der baulichen Gegebenheiten an der vorgesehenen Stelle zu positionieren. Insbesondere kann vorgesehen sein, dass die Aufhängevorrichtung 15 während der Installation der modularen Ladestation in der Montageschiene 27 verschoben wird und dann eine Festlegung der Aufhängevorrichtung 15 an der Montageschiene 27 erfolgt. Eine Längsverschiebbarkeit der Aufhängevorrichtung 15 an der Montageschiene 27 ist daher während der bestimmungsgemäßen Verwendung der Ladestation nicht vorgesehen.

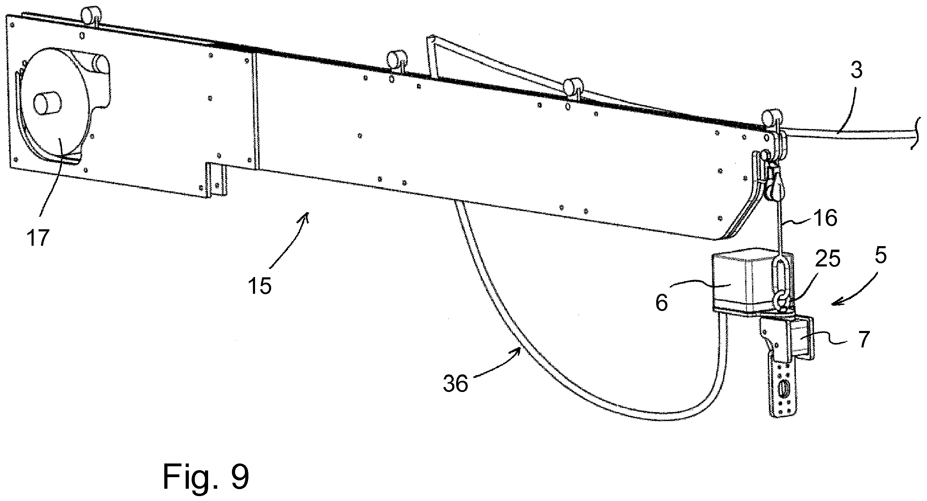

Über das Zugmittel 16 der Aufhängevorrichtung 15 ist die Sicherheitskupplung 5 der Sicherheitsladekabeleinrichtung 2 höhenverstellbar gehalten. Das Zugmittel 16, welches über die Öse 25 mit der ersten Koppeleinheit 6 der Sicherheitskupplung 5 verbunden ist, wird hierbei auf einer Trommel 17 der Aufhängevorrichtung 15 bevorratet, vergleiche Fig. 9. Eine Höhenverstellung zwischen einer Grundposition nach Fig. 9, in der jedenfalls die Sicherheitskupplung 5 mit dem Ladekabelstecker 26 benachbart zu dem Vordach 29 so hoch angeordnet ist, dass das Fahrzeug diese Funktionskomponenten der Ladestation beim Einparken auch mit dem Aufbau nicht berührt, und einer Bereitstellungsposition, in der der Ladekabelstecker 26 von einem Nutzer aus der Aufnahme 33 entnommen und mit dem Fahrzeug verbunden werden kann, beugt wirksam einer Beschädigung der Funktionskomponenten vor. Die Bereitstellungsposition ist dabei unterhalb der Grundposition vorgesehen.

Zum Verbringen der Sicherheitsladekabeleinrichtung 2 in die Bereitstellungsposition ist an der zweiten Koppeleinheit 7 der Sicherheitsladekabeleinrichtung 2 ein textiles Betätigungselement 14 vorgesehen, welches schlaufenförmig ausgebildet ist. Eine Länge des Betätigungselements 14 ist dabei so bestimmt, dass das Betätigungselement 14 auch dann gegriffen werden kann, wenn die Sicherheitsladekabeleinrichtung 2 in der Grundposition vorgesehen ist. Durch Ziehen des Betätigungselements 14 kann die Sicherheitsladekabeleinrichtung 2 dann in die Bereitstellungsposition verbracht werden.

In der Grundposition ist die Sicherheitsladekabeleinrichtung 2 gegen einen ersten Anschlag positioniert. Die Grundposition ist insofern die oberste Stellung, in die die Sicherheitskupplung 5 beziehungsweise die Sicherheitsladekabeleinrichtung 2 verbracht werden kann. Sie ist dabei insbesondere als eine Vorzugsposition ausgebildet, indem das Zugmittel 16 der Aufhängevorrichtung 15 mit einer Rückstellkraft beaufschlagt ist in Richtung der Trommel 17. Die Bereitstellungsposition ist vorliegend als eine Raststellung ausgebildet. Beim Verbringen der Sicherheitsladekabeleinrichtung 2 in die Bereitstellungsposition wird ebendiese zunächst über die Bereitstellungsposition hinaus nach unten bewegt und dann in die Bereitstellungsposition zurückgezogen. Der Rückzug erfolgt ohne Zutun durch die auf das Zugmittel 16 aufgeprägte Rückstellkraft. Zum Verbringen der Sicherheitsladekabeleinrichtung 2 aus der Bereitstellungsposition in die Grundposition wird über das Zugmittel 16 zunächst gegen die Rückstellkraft eine Bewegung nach unten aufgeprägt, um die Verrastung zu lösen, und dann gelangt die Sicherheitsladekabeleinrichtung 2 aufgrund der aufgeprägten Rückstellkraft selbsttätig in die Grundposition.

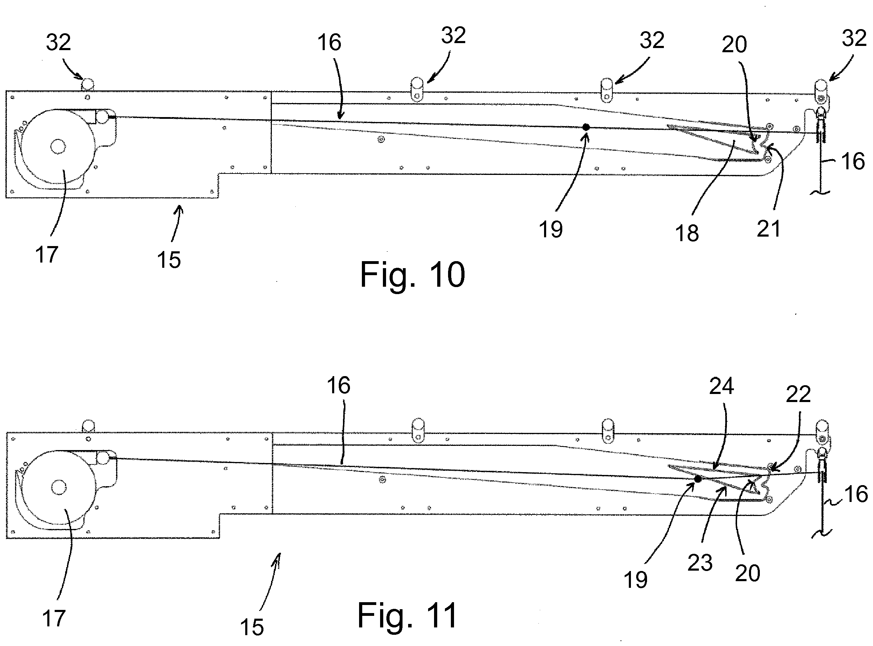

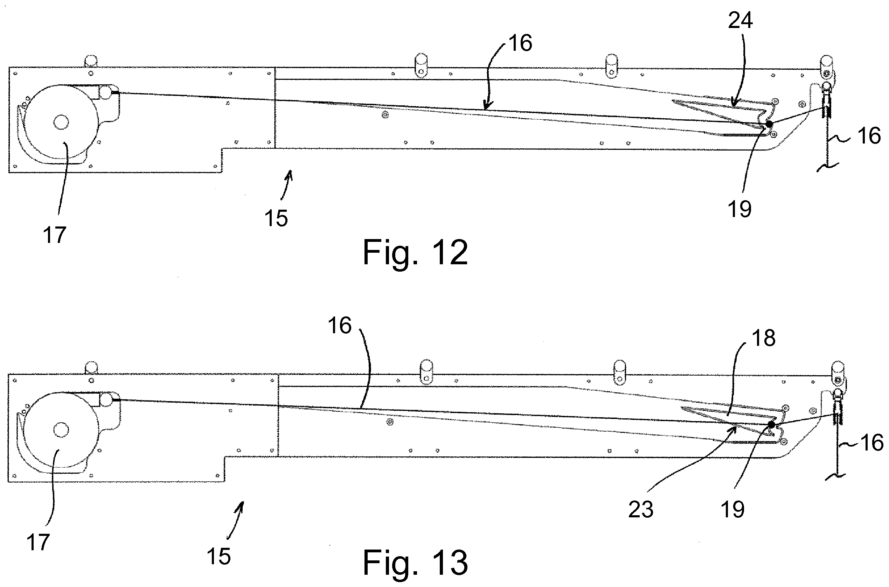

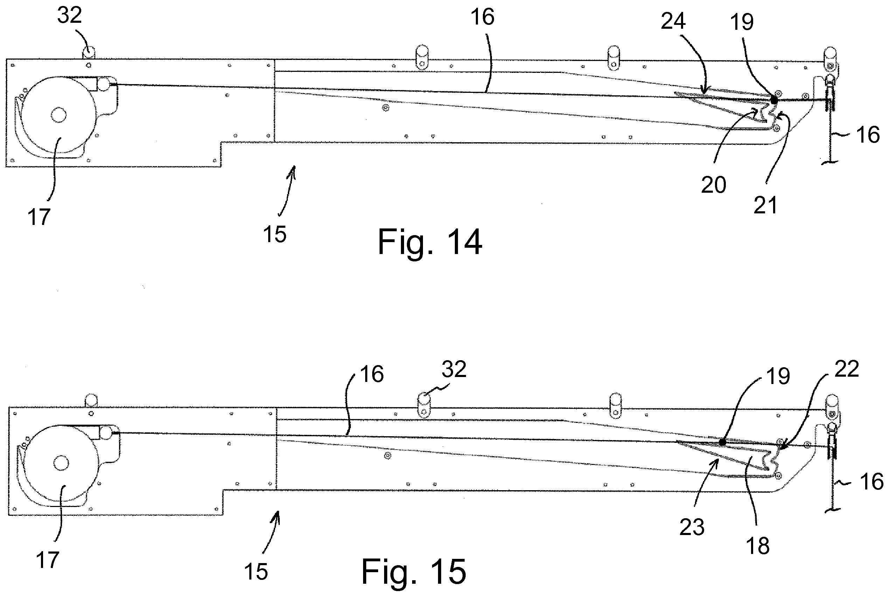

Die Realisierung der Rastfunktion ist in den Fig. 10 bis 15 dargestellt. Es ist hierzu in einem Gehäuse der Aufhängevorrichtung 15 an dem Zugmittel 16 ein kugelförmiger Rastkörper 19 vorgesehen. Der Rastkörper 19 befindet sich in der Grundposition der Sicherheitsladekabeleinrichtung 2 außerhalb eines Wirkbereichs einer Steuerkulisse 18. Wird nun die Sicherheitsladekabeleinrichtung 2 aus der Grundposition in die Bereitstellungsposition verbracht, gelangt der Rastkörper 19 zunächst in den Wirkungsbereich einer ersten Steuerkante 23 der Steuerkulisse 18 und wird dann gegen einen ersten Block 21 festgelegt. Der erste Block 21 bildet einen zweiten Anschlag und definiert die unterste Stellung der Sicherheitsladekabeleinrichtung 2 beim Verbringen derselben aus der Grundposition in die Bereitstellungsposition. Wird nun der Zug gelöst beziehungsweise die Zugkraft reduziert, gelangt der Rastkörper 19 in die an der Steuerkulisse 18 gebildete Senke 20, die als ein weiterer Anschlag für den Rastkörper 19 dient, und die Sicherheitsladekabeleinrichtung 2 befindet sich in der Bereitstellungsposition. Zum Verbringen der Sicherheitsladekabeleinrichtung 2 aus der Bereitstellungsposition zurück in die Grundposition wird zunächst erneut eine Zugkraft auf die Sicherheitsladekabeleinrichtung 2 aufgeprägt und der Rastkörper 19 wird gegen einen zweiten Block 22 positioniert. Sofern der Rastkörper 19 in dem zweiten Block 22 vorgesehen ist, ist die Sicherheitsladekabeleinrichtung 2 in einem Umkehrpunkt. Wird nun die Zugkraft reduziert, wird infolge der auf das Zugmittel 16 wirkenden Rückstellkraft die Sicherheitsladekabeleinrichtung 2 in die Grundposition zurückverbracht. Der Rastkörper 19 ist hierbei entlang einer zweiten Steuerkante 24 der Steuerkulisse 18 geführt. Es ist also so, dass die Bereitstellungsposition der Sicherheitsladekabeleinrichtung 2, in der der Rastkörper 19 in der Senke 20 der Steuerkulisse 18 geführt ist, nicht die niedrigste beziehungsweise unterste Position der Sicherheitsladekabeleinrichtung 2 definiert. Sowohl beim Verbringen der Sicherheitsladekabeleinrichtung 2 in die Bereitstellungsposition als auch beim Verbringen der Sicherheitsladekabeleinrichtung 2 aus der Bereitstellungsposition in die Grundposition wird die Sicherheitsladekabeleinrichtung 2 kurzfristig unter die Bereitstellungsposition verbracht zum Verrasten beziehungsweise Lösen der Verrastung der Sicherheitsladekabeleinrichtung 2.

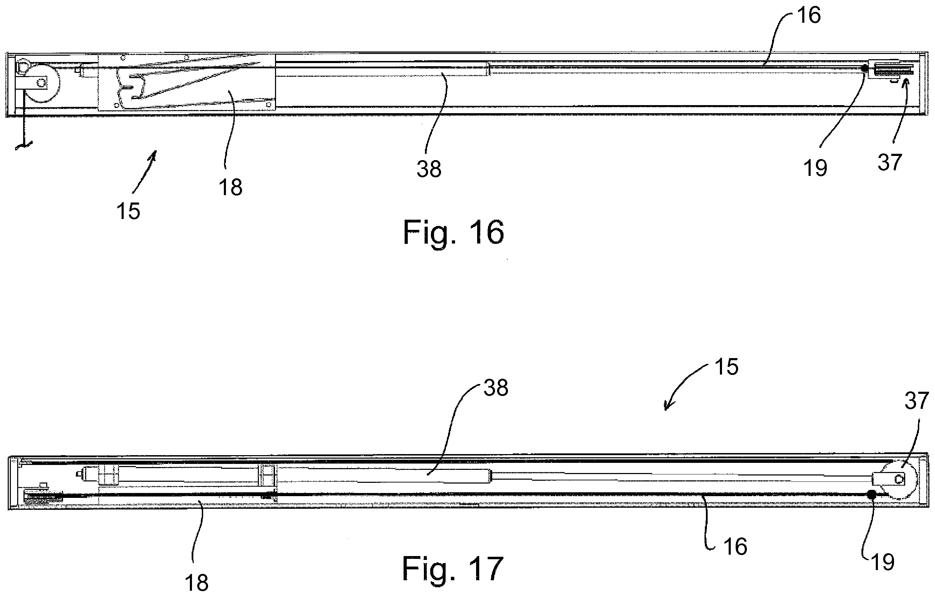

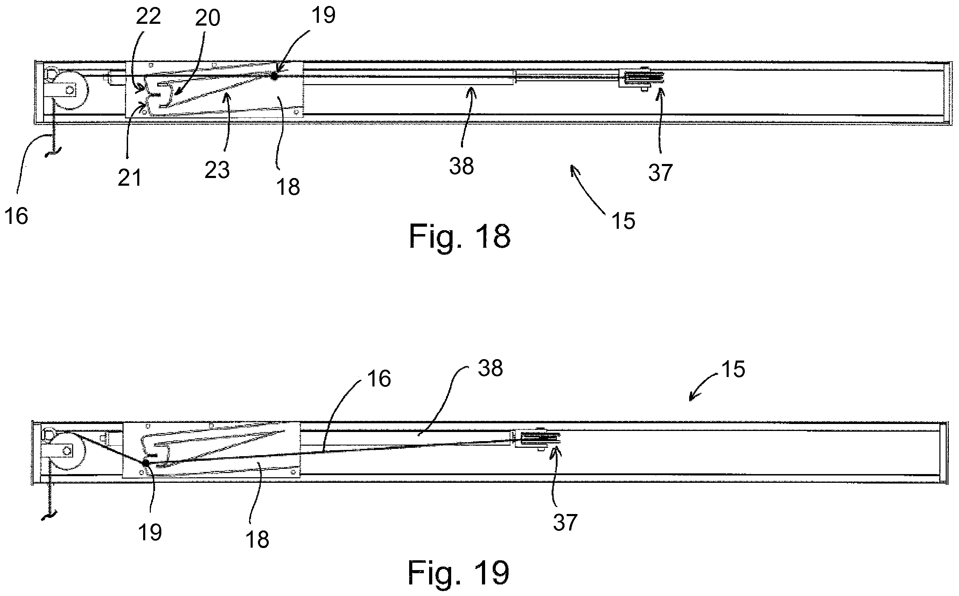

Eine erste alternative Ausführungsform der Aufhängevorrichtung 15 ist in den Fig. 16 bis 22 dargestellt. Es ist hierbei wie zuvor in dem Gehäuse der Aufhängevorrichtung 15 an dem Zugmittel 16 der kugelförmige Rastkörper 19 vorgesehen. Der Rastkörper 19 wirkt in der bekannten Weise mit der Steuerkulisse 18 zusammen. Insbesondere wird der an dem Zugmittel 16 festgelegte Rastkörper 19 in der zuvor beschriebenen Weise beim Verbringen des Ladekabelsteckers 26 von der Grundposition in die Bereitstellungsposition und zurück an der Steuerkulisse 18 geführt und gegen den als zweiten Anschlag dienenden ersten Block 21, die als weiteren Anschlag dienende Senke 20 sowie den zweiten Block 22 positioniert. Nach der ersten alternativen Ausführungsform der Aufhängevorrichtung 15 ist jedoch auf die Trommel 17 zur Bevorratung des Zugmittels 16 verzichtet. Stattdessen ist das Zugmittel 16 über eine Umlenkrolle 37 geführt, welche gegen eine Gasdruckfeder 38 abgestützt ist.

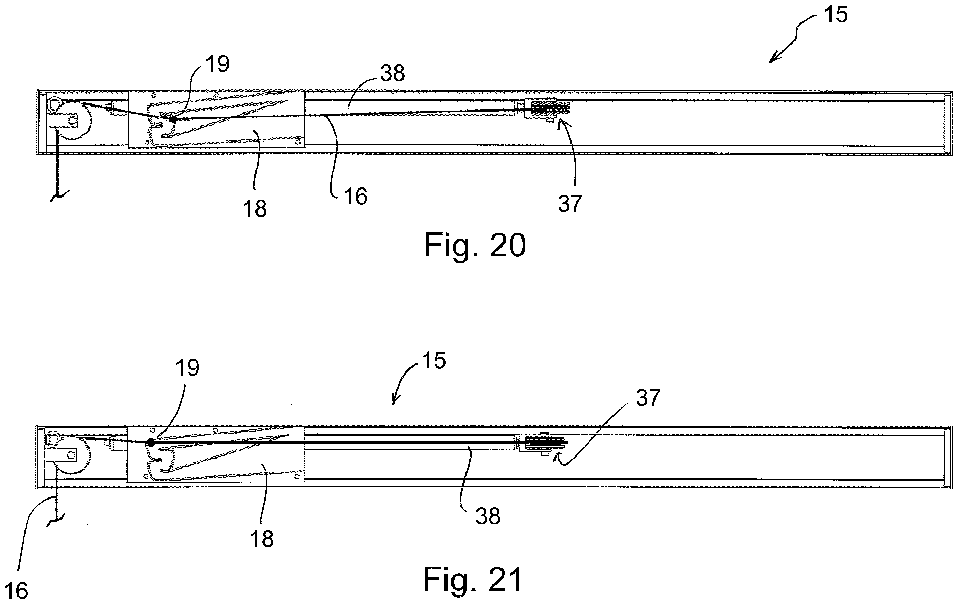

Wird zum Verbringen des Ladekabelsteckers 26 aus der Grundposition nach Fig. 16 in die Bereitstellungsposition nach Fig. 20 endseitig auf das Zugmittel 16 eine Zugkraft aufgebracht, wird die Umlenkrolle 37 infolge der Verkürzung des Zugmittels 16 in der Aufhängevorrichtung 15 gegen die Gasdruckfeder 38 in Richtung der Steuerkulisse 18 verschoben. Die Gasdruckfeder 38 prägt insofern die der Verstellbewegung entgegenwirkende Rückstellkraft auf das Zugmittel 16 auf.

Um zu einem späteren Zeitpunkt den Ladekabelstecker 26 aus der Bereitstellungsposition in die Grundposition zu verbringen, wird die Rastung des Rastkörpers 19 in bekannter Weise gelöst, indem zunächst eine Zugkraft auf das Zugmittel 16 aufgeprägt wird und der Rastkörper 19 gegen den zweiten Block 22 positioniert wird. Nach dem Entspannen drückt dann die Gasdruckfeder 38 die Umlenkrolle 37 von der Steuerkulisse 18 weg mit der Folge, dass der Ladekabelstecker 26 in die Grundposition zurückverbracht wird.

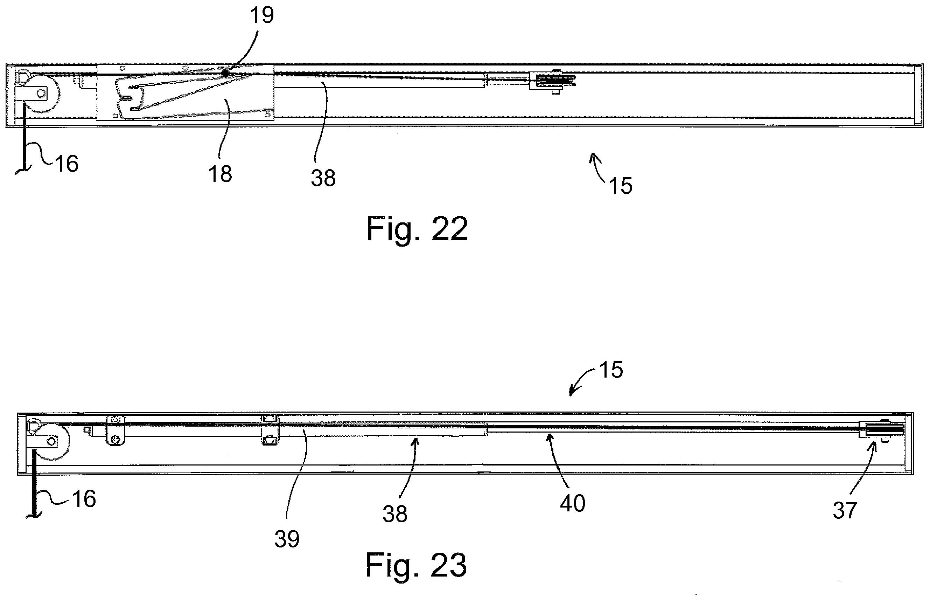

Fig. 23 zeigt eine zweite alternative Ausführungsform der erfindungsgemäßen Aufhängevorrichtung 15. Hierbei ist es so, dass auf die Steuerkulisse 18 und den mit der Steuerkulisse 18 zusammenwirkenden Rastkörper 19 verzichtet ist. Stattdessen ist die Rastfunktion der Aufhängevorrichtung 15 in die Gasdruckfeder 38 integriert.

Zur Verrastung des Ladekabelsteckers 26 in der Bereitstellungsposition wird dieser zunächst über die Bereitstellungsposition hinaus nach unten bewegt. Beim anschließenden Entlasten verrastet ein längsverschiebbar in einem zylindrischen Gehäuse 39 der Gasdruckfeder 38 gehaltener Stößel 40 mit der Folge, dass der Ladekabelstecker 26 in der Bereitstellungsposition bereitgestellt ist.

Die Verrastung wird gelöst, indem der Ladekabelstecker 26 aus der Bereitstellungsposition abgesenkt wird. Nach dem Lösen der Verrastung entspannt die Gasdruckfeder 38 und der Ladekabelstecker 26 gelangt zurück in die Grundposition.

Die erfindungsgemäße modulare Ladestation kann vorteilhaft verwendet werden, um elektrisch betriebene Nutzfahrzeuge, beispielsweise im Nahverkehr eingesetzte Transporter oder andere Verteilfahrzeuge, während des Beladens mit Waren elektrisch zu laden. Die Über-Kopf-Montage der Sicherheitsladekabeleinrichtung 2 erlaubt es insofern zum einen, die Waren im Wesentlichen beeinträchtigungsfrei seitlich oder von hinten in das Fahrzeug zu laden. Die aufgehangene Sicherheitsladekabeleinrichtung 2 stört insofern den Beladevorgang nicht. Zum anderen bietet die Über-Kopf-Montage der Sicherheitsladekabeleinrichtung 2 einen maximalen Rangierfreiraum beim Parken des Fahrzeugs. Selbst bei einer großen Aufbauhöhe kann die Grundposition der Sicherheitsladekabeleinrichtung 2 regelmäßig so gewählt werden, dass das Fahrzeug beeinträchtigungsfrei und ohne mechanische Berührung der Sicherheitsladekabeleinrichtung 2, des Ladekabelsteckers 26 beziehungsweise der Sicherheitskupplung 5 eingeparkt und abgestellt werden kann. Sollte es gleichwohl im Einzelfall doch zu einer mechanischen Berührung kommen, ist durch das Vorsehen der Sicherheitskupplung 5 einer Beschädigung der Ladestation beziehungsweise einer Gefahr für Leib und Leben der beteiligten Personen vorgebeugt, indem beim Überschreiten einer konstruktiv vorbestimmten Trennkraft des Verbindungsmoduls 8 zunächst die mechanische Verbindung zwischen der ersten Koppeleinheit 6 und der zweiten Koppeleinheit 7 aufgehoben wird und dann im Weiteren das Steckelement 11 vom Gegensteckelement 12 getrennt wird. Es ist insofern einer mechanischen Beschädigung insbesondere der Aufhängevorrichtung 15, des ersten Ladekabelsegments 3 und des Steuergeräts 1 vorgebeugt. Zudem kann nach der Trennung die elektrische und mechanische Verbindung wieder hergestellt werden und die erfindungsgemäße Ladestation innerhalb kürzester Zeit erneut in Betrieb genommen werden.

Darüber hinaus gestaltet sich die Installation der erfindungsgemäßen modularen Ladestation besonders einfach. Es ist insbesondere möglich, das Steuergerät 1, die Aufhängevorrichtung 15, die Sicherheitskupplung 5 sowie das zweite Ladekabelsegment 4 mit der Aufnahme 33, dem Ladekabelstecker 26 und dem Spiralkabelabschnitt 35 werksseitig vorzufertigen. Bei einer Montage vor Ort werden insofern das Steuergerät 1, die Montageschiene 27 und sodann die Aufhängevorrichtung 15 montiert. Wird dann im Weiteren die Sicherheitsladekabeleinrichtung 2 montiert, kann das erste Ladekabelsegment 3 in einer vor Ort nach den baulichen Gegebenheiten bestimmten Länge zugeschnitten und mit dem Steuergerät 1 einerseits sowie dem Steckelement 11 der ersten Koppeleinheit 6 andererseits verbunden werden. Die elektrisch kontaktierte Sicherheitskupplung 5 kann dann mit dem Zugmittel 16 verbunden werden, wobei abhängig von den baulichen Gegebenheiten und Höhe der Grundposition das Zugmittel 16 vor Ort eingekürzt wird. Es ist also folglich so, dass eine individuelle Anpassung an die baulichen Gegebenheiten allein für das erste Ladekabelsegment 3 und das Zugmittel 16 der Aufhängevorrichtung 15 erfolgen muss. Alle anderen Komponenten können werksseitig vorgefertigt werden. Bedarfsgerecht können hierbei geeignete Verbindungsmittel 30 zum Befestigen der Montageschiene 27 an dem Vordach 29 vorgesehen und bereitgehalten werden.

## Patentansprüche

1. Ladestation zum Bereitstellen elektrischer Energie für ein elektrisch betreibbares Fahrzeug umfassend eine Ladekabeleinrichtung (2) mit einem Ladekabelstecker (26) zum Anschluss an das Fahrzeug, wobei der Ladekabelstecker (26) höhenverstellbar aufgehängt ist mittels einer Aufhängevorrichtung (15), die über ein Zugmittel (16) verfügt zum jedenfalls mittelbaren Halten des Ladekabelsteckers (26), wobei der Ladekabelstecker (26) in einer Grundposition gegen einen ersten Anschlag positioniert ist und aus der Grundposition in eine Bereitstellungsposition verbringbar ist, in der der Ladekabelstecker (26) unterhalb der Grundposition bereitgestellt ist, wobei zum Verbringen des Ladekabelsteckers (26) aus der Grundposition in die Bereitstellungsposition ein biegeschlaff ausgebildetes und/oder schwenkbar befestigtes Betätigungselement (14) vorgesehen ist, welches mit dem Ladekabelstecker (26) jedenfalls mittelbar verbunden ist.

2. Ladestation nach Anspruch 1, **dadurch gekennzeichnet, dass** die Grundposition des Ladekabelstecker (26) als eine Vorzugsstellung ausgebildet ist, indem das Zugmittel (16) der Aufhängevorrichtung (15) mit einer Rückstellkraft beaufschlagt ist.

3. Ladestation nach Anspruch 1 oder 2, **dadurch gekennzeichnet, dass** die Bereitstellungsposition als eine Raststellung ausgebildet ist derart, dass der Ladekabelstecker (26) zum Verbringen desselben in die Bereitstellungsposition zunächst über die Bereitstellungsposition hinaus bewegt wird und dann in die Bereitstellungsposition zurückgezogen wird und/oder dass der Ladekabelstecker (26) zum Verbringen desselben aus der Bereitstellungsposition in die Grundposition zunächst gegen die Rückstellkraft des Zugmittels (16) bewegt wird und dann in die Grundposition zurückgezogen wird.

4. Ladestation nach einem der Ansprüche 1 bis 3, **dadurch gekennzeichnet, dass** das Zugmittel (16) mit einer Federkraft und/oder Gewichtskraft beaufschlagt ist zum Aufprägen der Rückstellkraft und/oder dass die Federkraft von einer Gasdruckfeder bereitgestellt ist.

5. Ladestation nach einem der Ansprüche 1 bis 4, **dadurch gekennzeichnet, dass** ein Verstellweg für den Ladekabelstecker (26) über einen zweiten Anschlag begrenzt ist.

6. Ladestation nach einem der Ansprüche 1 bis 5, **dadurch gekennzeichnet, dass** ein vertikaler Abstand zwischen der Grundposition und der Bereitstellungsposition kleiner ist als der Verstellweg für den Ladekabelstecker (26) und/oder dass ein Verhältnis zwischen dem vertikal bestimmten Abstand zwischen der Grundposition und der Bereitstellungsposition einerseits und dem Verstellweg andererseits wenigstens 0,9 und bevorzugt wenigstens 0,95 beträgt.

7. Ladestation nach einem der Ansprüche 1 bis 6, **dadurch gekennzeichnet, dass** das Betätigungselement (14) als ein textiles Betätigungselement und/oder als eine Griffschlaufe ausgebildet ist.

8. Ladestation nach einem der Ansprüche 1 bis 7, **dadurch gekennzeichnet, dass** das Zugmittel (16) elastisch und/oder biegeschlaff ausgebildet ist und/oder dass das Zugmittel (16) in der Grundposition und/oder der Bereitstellungsposition jedenfalls abschnittsweise auf einer Trommel der Aufhängevorrichtung (15) bevorratet ist.

9. Ladestation nach einem der Ansprüche 1 bis 8, **dadurch gekennzeichnet, dass** zur Realisierung der Raststellung an dem Zugmittel (16) ein Rastkörper (19) festgelegt ist und/oder dass der Rastkörper in der Bereitstellungsposition gegen den zweiten und/oder einen weiteren Anschlag positioniert ist.

10. Ladestation nach Anspruch 9, **dadurch gekennzeichnet, dass** der Rastkörper beim Verbringen des Ladekabelsteckers (26) von der Grundposition in die Bereitstellungsposition und/oder zurück entlang einer Steuerkulisse (18) geführt ist.

11. Ladestation nach Anspruch 9 oder 10, **dadurch gekennzeichnet, dass** der erste Anschlag und/oder der zweite Anschlag und/oder der weitere Anschlag durch an der Steuerkulisse (18) gebildete Blöcke (21, 22) gebildet sind, gegen die der Rastkörper (19) positioniert ist, und/oder dass der Rastkörper (19) in der Bereitstellungsposition in einer Senke (20) der Steuerkulisse (18) gehalten ist.

12. Ladestation nach einem der Ansprüche 9 bis 11, **dadurch gekennzeichnet, dass** der Rastkörper (19) beim Verbringen des Ladekabelsteckers (26) von der Grundposition in die Bereitstellungsposition entlang einer ersten Steuerkante (23) der Steuerkulisse (18) geführt ist und/oder dass der Rastkörper (19) beim Verbringen des Ladekabelsteckers (26) von der Bereitstellungsposition in die Grundposition entlang einer zweiten Steuerkante (24) der Steuerkulisse (18) geführt ist.

13. Ladestation nach einem der Ansprüche 3 bis 12, **dadurch gekennzeichnet, dass** zur Realisierung der Raststellung des Ladekabelsteckers (26) in der Bereitstellungsposition ein Rastelement räumlich in die Gasdruckfeder (38) integriert ist, mittels der die Kraftbeaufschlagung des Zugmittels (16) erfolgt.

14. Ladestation nach einem der Ansprüche 1 bis 13, **dadurch gekennzeichnet, dass** die Ladekabelanordnung (2) ein erstes Ladekabelsegment (3), welches über ein elektrisches Schaltmodul an ein Versorgungsnetz angeschlossen ist, ein zweites Ladekabelsegment (4), an dem endseitig der Ladekabelstecker (26) festgelegt ist zum Anschluss an das Fahrzeug, und ein Adaptermodul (5) umfasst zum elektrischen und mechanischen Verbinden der Ladekabelsegmente (3, 4), wobei das Zugmittel (16) an dem ersten Ladekabelsegment (3) und/oder an dem Adaptermodul (5) festgelegt ist.

15. Ladestation nach einem der Ansprüche 1 bis 14, **dadurch gekennzeichnet, dass** die Ladekabeleinrichtung als eine Sicherheitsladekabeleinrichtung (2) ausgebildet ist mit einem ersten Ladekabelsegment (3), welches über ein elektrisches Schaltmodul an ein Versorgungsnetz angeschlossen ist, mit einem zweiten Ladekabelsegment (4), an dem endseitig ein Ladekabelstecker (26) festgelegt ist zum Anschluss der Ladestation an das Fahrzeug, und mit einer mehrteiligen Sicherheitskupplung (5) zum elektrischen und mechanischen Verbinden des ersten Ladekabelsegments (3) mit dem zweiten Ladekabelsegment (4), wobei die Sicherheitskupplung (5) eine erste Koppeleinheit (6), eine zweite Koppeleinheit (7) und ein zum lösbaren, mechanischen Verbinden der ersten Koppeleinheit (6) mit der zweiten Koppeleinheit (7) ausgebildetes Verbindungsmodul (8) aufweist, wobei die erste Koppeleinheit (6) ein elektrisch leitend mit dem ersten Ladekabelsegment (3) verbundenes Steckelement (11) umfasst und wobei die zweite Koppeleinheit (7) ein elektrisch leitend an das Steckelement (11) der ersten Koppeleinheit (6) ansetzbares Gegensteckelement (12) vorsieht zum Bilden einer Steckverbindung, welche elektrisch leitend mit dem zweiten Ladekabelsegment (4) verbunden ist, und/oder dass das Adaptermodul (5) als Sicherheitskupplung ausgebildet ist.
